# EUROPÄISCHE PATENTSCHRIFT

(11) **EP 0 790 415 B1**
(45) Veröffentlichungstag und Bekanntmachung des Hinweises auf die Patenterteilung: **29.03.2000**
(21) Anmeldenummer: 97810018.8
(22) Anmeldetag: 15.01.1997
(51) Int. Cl.: F16B 13/12

(54) **Spreizdübel**
Expansion dowel
Cheville d'expansion

(30) Priorität: 30.01.1996 DE 19603265
(43) Veröffentlichungstag der Anmeldung: 20.08.1997
(73) Patentinhaber: HILTI Aktiengesellschaft, 9494 Schaan (LI)
(72) Erfinder: Kaibach, Werner, 86807 Buchloe (DE)
(74) Vertreter: Wildi, Roland

(56) Entgegenhaltungen:
- DE-A- 3 622 937
- FR-A- 2 218 495
- US-A- 5 342 157

## Beschreibung

Die Erfindung betrifft einen Spreizdübel mit Spreizhülse und Spreizkörper gemäss dem Oberbegriff des Patentanspruchs 1.

Spreizdübel der gattungsgemässen Art umfassen eine Spreizhülse mit einer Durchgangsbohrung, einem aufweitbaren Spreizbereich im in Setzrichtung vorderen Abschnitt der Spreizhülse und Mittel zum Lastangriff im gegenüberliegenen rückwärtigen Endbereich der Spreizhülse sowie ein Spreizelement, das unter Aufweiten des Spreizbereiches in der sich in Setzrichtung verengenden Durchgangsbohrung von einer Anfangsposition in eine Endposition vortreibbar ist. Um das Aufweiten durch den vorgetriebenen Spreizkörper zu ermöglichen, ist die Spreizhülse mit mehreren, zum Vorderende der Spreizhülse offenen Längsschlitzen versehen, die den Spreizbereich in eine Anzahl Spreizlappen unterteilen. Am rückwärtigen Ende der Längsschlitze sind die Spreizlappen unter Bildung eines ersten plastischen Gelenks mit dem über seinen Umfang geschlossenen Abschnitt der Spreizhülse verbunden.

Ein derartiger Spreizdübel ist beispielsweise aus der US-A-5,342,157 bekannt. Er weist einen Spreizbereich auf, der sich zu einem am vorderen Ende der Spreizhülse angeordneten Ringbund verjüngt. Der Ringbund ist mit einer radial ausgerichteten, umlaufenden Schneide ausgestattet. Beim Aufspreizen des Spreizbereiches dringt der Ringbund mit seiner Schneide in die Wandung der zylindrischen Aufnahmebohrung ein und stellt eine formschlüssige Verbindung zwischen dem Schlagspreizdübel und dem Mauerwerk her. Um den Spreizdübel während des Aufspreizvorgangs axial festzulegen, ist in der Druckschrift erwähnt, dass der Spreizdübel eine Spreizhülse mit einem Anschlagbund aufweisen kann, der im Bereich der Bohrlochöffnung übersteht. Der Anschlagbund bildet einen Tiefenanschlag, der ein Eindringen des Spreizdübels bis zum Bohrlochgrund verhindern soll. Auf diese Weise soll im Bereich des Bohrlochgrundes genügend Freiraum für die Aufnahme des vorderen kegeligen Bereiches des Spreizkörpers verbleiben.

In vielen Anwendungsfälle ist es aber ungünstig und unerwünscht, dass der Spreizdübel über die Bohrlochmündung übersteht; vielfach besteht sogar das zwingende Erfordernis, dass die rückwärtige Stimfläche der Spreizhülse etwas tiefer als die Bohrlochmündung liegt oder höchstens bündig mit ihr abschliesst. Für diese Anwendungsfälle ist in der US-A-5,342,157 bei einer bevorzugten Ausführungsform des bekannten Schlagspreizdübels auf die Stirnseite der Spreizhülse eine Distanzkappe aus Kunststoff aufsetzbar, die einen Aufnahmeraum besitzt, in den der vordere kegelige Bereich des Spreizkörpers beim Aufspreizvorgang eindringen kann. Die Distanzkappe dient dazu, den Spreizdübel während des Aufspreizvorgangs axial festzulegen. Es ist leicht einsichtig, dass der Aufspreizvorgang durch die aufgesetzte Distanzkappe erschwert ist. Zwar ist in der Druckschrift angeführt, dass die Distanzkappe aus Kunststoff oder einem anderen gleitfähigen Material besteht. Jedoch entstehen während des Aufspreizvorgangs zwischen der vorderen Stimfläche der Spreizhülse und der Auflagefläche an der Distanzkappe dennoch sehr hohe Reibungskräfte, die dem Aufspreizen der Spreizhülse entgegenwirken. Der Spreizdübel umfasst zwei Bestandteile, den eigentlichen Spreizdübel und die Distanzhülse, die zusammengehören und gemeinsam in die Aufnahmebohrung eingesetzt werden müssen. Die Distanzhülse wird auf das Vorderende des Spreizdübels aufgesteckt und ist dort relativ fest gehalten. Dennoch kann es vorkommen, dass die Distanzhülse bei der Lagerung oder bei der Manipulation auf der Baustelle abgestreift wird. Ohne Distanzhülse kann aber der Spreizdübel nicht mehr eingesetzt werden oder zumindest nicht mehr zuverlässig verspreizt werden.

Diese bekannten Spreizdübel werden oftmals auch als Schlagspreizdübel bezeichnet, da sie in durch schlagendes Vortreiben des Spreizkörpers in der Durchgangsbohrung der Spreizhülse unter Aufspreizen der Spreizhülse in der Aufnahmebohrung verankert werden. Dabei wird die aufgebrachte Axialkraft wegen der Form des Spreizkörpers und/oder der sich in Setzrichtung verengenden Durchgangsbohrung in eine radiale und eine axiale Kraftkomponente aufgeteilt. Die radiale Kraftkomponente führt zum Aufspreizen der Spreizhülse. Die axiale Kraftkomponente wird entweder über den angeformten Anschlagbund in die Oberfläche des Untergrundes oder über die Distanzkappe in den Bohrlochgrund eingeleitet und trägt zur Aufspreizung der Spreizhülse nichts bei. Bei diesen bekannten Spreizdübeln geht also ein nicht unwesentlicher Teil der aufgebrachten Kraft ungenützt verloren.

Aufgabe der vorliegenden Erfindung ist es daher, einen Spreizdübel zu schaffen, der die aufgebrachte Verspreizenergie möglichst effizient ausnützt. Verluste der aufgebrachten Axialkraft sollen durch die Konzeption des Spreizdübels weitgehend vermieden werden. Der Spreizdübel soll axial in der Aufnahmebohrung festgelegt sein und auch in Anwendungen einsetzbar sein, in denen kein Bestandteil des Spreizdübels über die Bohrlochmündung überstehen darf. Es soll ein Spreizdübel geschaffen werden, der einfach in der Lagerung und in der Handhabung ist und ohne weitere Vorbereitungsmassnahmen in eine Aufnahmebohrung einsetzbar ist. Er soll bei verhältnismässig geringen erforderlichen Setzkräften hohe Auszugswerte ermöglichen, ohne die angrenzende Wandung der Aufnahmebohrung zu schädigen. Der Spreizdübel soll während des Aufspreizvorgangs selbsttätig einen Formschluss mit der Wandung der Aufnahmebohrung erzeugen und soll auch für die Zugzone eines Bauteils geeignet sein.

Die Lösung dieser Aufgaben besteht in einem Spreizdübel, der die im Patentanspruch 1 angeführten Merkmale aufweist. Der erfindungsgemässe Spreizdübel umfasst eine Spreizhülse, deren eine Endabschnitt Mittel zur Lastaufnahme und deren gegenüberliegende Abschnitt einen Spreizbereich aufweist, der durch eine Anzahl von zum setzrichtungsseitigen Vorderende der Spreizhülse offenen Längsschlitzen in Spreizlappen unterteilt ist, die unter Bildung eines plastischen Gelenks mit der Spreizhülse verbunden sind und einen durch die Längsschlitze unterbrochenen, umlaufenden Ringbund aufweisen. Ein Spreizkörper ist in einer axialen Durchgangsbohrung der Spreizhülse unter Aufweiten des Spreizbereiches von einer Ausgangslage in eine Endlage vortreibbar. Die Spreizlappen erstrecken sich über den umlaufenden Ringbund hinaus und sind unter Bildung eines zweiten plastischen Gelenks einstückig mit Distanzsegmenten verbunden, die entgegen der Aufweitbewegung der Spreizlappen einknickbar sind.

Durch die erfindungsgemässe Verlängerung der Spreizlappen über den umlaufenden Ringbund hinaus ist der Spreizdübel beim Aufspreizvorgang in der Aufnahmebohrung axial festgelegt. Auf einen rückwärtigen Anschlagbund kann verzichtet werden, und es ragen keine Bestandteile des Spreizdübels aus der Bohrlochmündung heraus. Im Bereich zwischen dem umlaufenden Ringbund und dem Bohrlochgrund verbleibt ausreichend Platz zur Aufnahme des vorderen Bereichs des vorgetriebenen Spreizkörpers. Die Distanzsegmente stehen am Bohrlochgrund auf. Durch das Vorsehen eines zweiten plastischen Gelenks zwischen den verlängerten Spreizlappen und den Distanzsegmenten können die Distanzsegmente entgegen der Ausspreizbewegung der Spreizlappen nach innen klappen und wandeln die axiale Kraftkomponente in ein plastisches Moment um, welches das von der radialen Kraftkomponente resultierende Verspreizmoment unterstützt. Dadurch wird die erforderliche Verspreizenergie reduziert. Verluste aufgrund von Reibung axial aufeinander arbeitender Flächen werden vermieden. Die Distanzlappen sind einstückig an die verlängerten Spreizsegmente angeformt. Der erfindungsgemässe Spreizdübel muss daher vor der Anwendung nicht erst aus zwei Bestandteilen zusammengebaut werden sondern ist unmittelbar einsatzbereit. Dadurch wird die Lagerhaltung und die Manipulation vereinfacht. Es kann nicht mehr vorkommen, dass ein wesentliches Element des Spreizdübels abhanden kommt oder aufgrund von fehlenden Bestandteilen ein Spreizdübel nur unzureichend in der Aufnahmebohrung verankert wird. Der umlaufende Ringbund im Bereich der Spreizlappen erzeugt während des Aufspreizvorgangs selbsttätig einen Formschluss mit der Wandung der Aufnahmebohrung. Der Formschluss unterstützt den Kraftschluss des in der Aufnahmebohrung verspreizten Spreizdübels und erlaubt es, ihn auch in der Zugzone von Bauteilen einzusetzten.

Es ist von Vorteil, wenn sich die Durchgangsbohrung vom ersten plastischen Gelenk in Richtung des zweiten plastischen Gelenks bis zu einem Bereich des kleinsten Bohrungsdurchmessers verjüngt, der im Bereich des umlaufenden Ringbundes angeordnet ist. Dabei schliesst die Wandung der Durchgangsbohrung mit der Längsachse der Spreizhülse einen Winkel von etwa 8° bis etwa 13°, vorzugsweise etwa 10°, ein und erweitert sich danach zum freien Vorderende der Distanzsegmente wieder. Indem die Durchgangsbohrung im Bereich des umlaufenden Ringbunds ihren engsten Durchmesser aufweist, wird gerade dort der grösste Spreizdruck erzeugt, um den Formschluss mit der Wandung der Aufnahmebohrung zu erzeugen. Dabei kommt es in diesem Bereich auch zu einer geringfügigen Einschnürung des Spreizkörpers, der dadurch in seiner vorgetriebenen Endlage fixiert ist und nicht mehr zurückgleiten kann. Der Winkel, den die Wandung der Durchgangsbohrung mit der Achse der Spreizhülse einschliesst, stellt sicher, dass die beim Verspreizen auftretenden Kräfte sich in Grenzen halten und der Spreizkörper auch in hochfestem Untergrund in der Durchgangbohrung von seiner Ausgangslage in seine Endlage vorgetrieben werden kann.

Indem die Spreizhülse im Bereich der Distanzsegmente einen kleineren Aussendurchmesser aufweist als im Bereich des umlaufenden Ringbundes ist sichergestellt, dass der Spreizdübel in der zum Bohrlochgrund enger werdenden Bohrung bis zum Bohrlochgrund vorgeschoben werden kann und nicht über die Bohrlochöffnung hinausragt. Ausserdem unterstützt die erfindungsgemässe Geometrie die Umlenkung der axialen Kraftkomponente.

In einer vorteilhaften Ausführungsvariante des erfindungsgemässen Spreizdübels ist die freie Stimfläche der Distanzsegmente kalottenförmig gekrümmt, wobei das vorderste Ende der Distanzsegmente in einem radialen Abstand zur Achse der Spreizhülse angeordnet ist, der kleiner ist als der radiale Abstand des zweiten plastischen Gelenks zur Achse. Durch die kalottenförmige Krümmung der freien Stirnflächen der Distanzsegmente können diese infolge der axial wirkenden Setzkrart am schräg zum Zentrum verlaufenden Bohrlochgrund abrollen. Durch die Wahl des radialen Abstands des vordersten Endes der Distanzsegmente zur Achse der Spreizhülse wird die Tendenz der Distanzsegmente, entgegen der Aufspreizbewegung der Spreizlappen nach innen zu klappen, noch verstärkt.

Die Umlenkung der axialen Kraftkomponente kann noch optimiert werden, indem die Distanzsegmente eine vom zweiten plastischen Gelenk bis zum Vorderende der Distanzsegmente gemessene axiale Länge aufweisen, die das etwa 0.19-fache bis etwa 0.2-fache der vom ersten plastischen Gelenk zum Vorderende der Spreizhülse gemessenen Gesamtlänge der Spreizlappen beträgt.

Die Kraftumlenkung wird auch dadurch unterstützt, dass die Durchgangsbohrung vom Vorderende der Distanzsegmente bis zum zweiten plastischen Gelenk zylindrisch ausgebildet ist und einen Bohrungsdurchmesser aufweist, der zur Länge der Distanzsegmente im Verhältnis von etwa 1.7 bis etwa 1.85 steht. Bei diesen Abmessungsverhältnissen bleibt auch bei nach innen, in Richtung der Achse der Spreizhülse, geknickten Distanzsegmenten ausreichend Raum für den vorderen Bereich des vorgetriebenen Spreizkörpers.

Die erzielbaren Auszugswerte des Spreizdübels werden dadurch erhöht, dass die Spreizlappen im Bereich zwischen dem ersten plastischen Gelenk und dem umlaufenden Ringbund eine im wesentlichen konkav verlaufende Aussenkontur aufweisen, die derart in den Ringbund einmündet, dass die Tangente an die Aussenkonturlinie mit der Achse der Spreizhülse einen Winkel von etwa 90° einschliesst. Im konkaven Bereich ist eine Einschnürung mit einem Aussendurchmesser vorgesehen, der zum Aussendurchmesser der Spreizhülse im Bereich der Lastangriffsmittel im Verhältnis von etwa 0.81 bis etwa 0.83 steht. Durch die erfindungsgemässe Geometrie des Spreizbereichs liegt im aufgespreizten Zustand die Mantelfläche der Spreizhülse im wesentlichen über ihre gesamte Längserstreckung flächig an der Wandung der Aufnahmebohrung an. Dadurch ergibt sich ein erhöhter Kraftschluss zwischen der Spreizhülse und der Wandung. Die Gestaltung des Übergangs der Aussenkontur in den umlaufenden Ringbund resultiert in einem nahezu idealen Formschluss mit nur geringem Spreizdruck bei grösstmöglicher Schonung der angrenzenden Wandung der Aufnahmebohrung.

In einer vorteilhaften Ausführungsvariante des erfindungsgemässen Spreizdübels weist der konkave Bereich der Spreizlappen eine Länge auf, die zum Aussendurchmesser an der Einschnürung im Verhältnis von etwa 1.22 bis etwa 1.27, insbesondere etwa 1.24 bis etwa 1.25, steht. Bei dieser Geometrie des konkaven Bereichs der Spreizhülse ist der Kraftschluss zwischen der Mantelfläche des Spreizbereichs und der Wandung der Aufnahmebohrung noch weiter optimiert, und es können noch höhere Auszugswerte erzielt werden.

Aus Symmetriegründen erweist es sich von Vorteil, wenn die Einschnürung etwa mittig der Längserstreckung des konkaven Bereichs angeordnet ist.

Der Spreizbereich der Spreizhülse weist 4 bis 8, vorzugsweise 6 Spreizlappen auf. Dadurch werden, insbesondere bei Spreizdübeln mit grösseren Durchmessern, die erforderlichen Spreizkräfte reduziert.

Im folgenden wird die Erfindung mit allen ihr als wesentlich zugehörigen Einzelheiten unter Bezugnahme auf ein in den Figuren dargestelltes Ausführungsbeispiel näher erläutert. Es zeigen:
- Fig. 1: einen erfindungsgemässen Spreizdübel im Axialschnitt; und
- Fig. 2: einen Axialschnitt des Spreizdübels gemäss Fig. 1 im verspreizten Zustand.

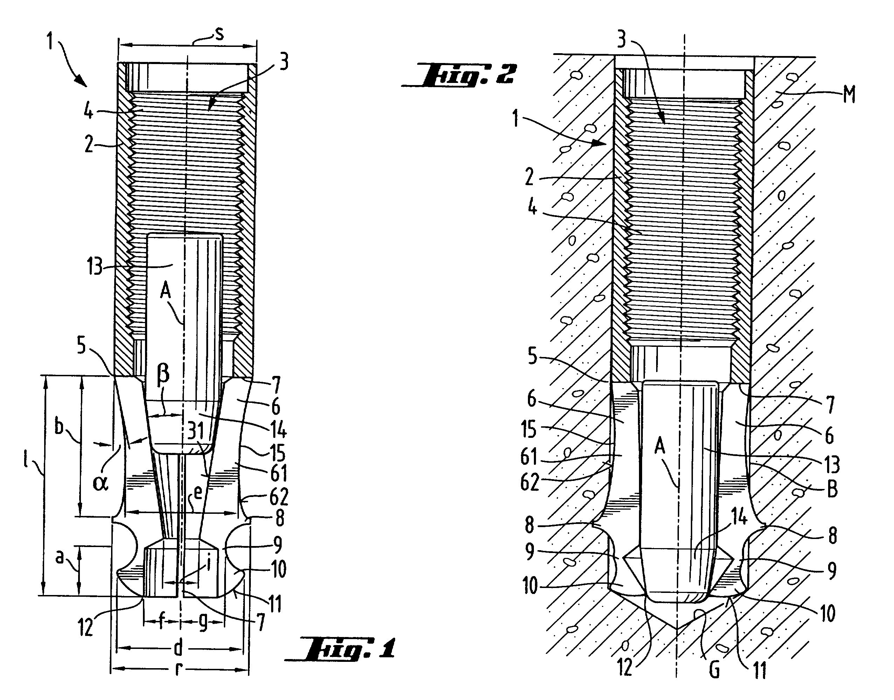

Ein Ausführungsbeispiel des erfindungsgemässen Spreizdübels ist in Fig. 1 und 2 jeweils gesamthaft mit dem Bezugszeichen 1 versehen. Er umfasst eine Spreizhülse 2 mit einer Durchgangsbohrung 3. Die Spreizhülse 2 ist an ihrem einen, rückwärtigen Ende mit einem Innengewinde 4 zur Lastaufnahme ausgestattet. Der gegenüberliegende Abschnitt der Spreizhülse 2 ist als Spreizbereich ausgebildet und durch eine Anzahl von Längsschlitzen 7 in Spreizlappen 6 unterteilt, die über ein erstes plastisches Gelenk 5 einstückig mit dem rückwärtigen geschlossenen Abschnitt der Spreizhülse 2 verbunden sind. Im dargestellten Ausführungsbeispiel sind 4 Spreizlappen 6 angedeutet. Abhängig vom Durchmesser des Spreizdübels können aber auch bis zu 8 Spreizlappen 6 ausgebildet sein. Dabei sind insbesondere bei den grösseren Durchmessern höhere Anzahlen von Spreizlappen 6 vorgesehen. Dabei erweist sich die Zahl von sechs Spreizlappen 6 als guter Kompromiss zwischen der erwünschten Erleichterung der Aufspreizung des Spreizbereiches und der Bereitstellung einer ausreichend grossen, weitgehend ununterbrochenen Verankerungsfläche.

Die Spreizlappen weisen einen Bereich 61 mit einer konkaven Aussenkontur auf, der sich vom ersten plastischen Gelenk 5 bis zu einem umlaufenden Ringbund 8 erstreckt. Der Neigungswinkel α, unter dem die Tangente an die Mantelfläche 62 im Bereich des ersten plastischen Gelenks 5 gegenüber der Achse A der Spreizhülse 2 geneigt ist, beträgt etwa 8° bis etwa 9°, vorzugsweise etwa 8.5°. Der konische Bereich 61 verjüngt sich bis zu einer Einschnürung 15, die etwa mittig der Längserstreckung b des konischen Bereichs 61 angeordnet ist, und besitzt dort einen Aussendurchmesser e, der zum Aussendurchmesser s der Spreizhülse 2 im Bereich des Innengewindes 4 im Verhältnis von etwa 0.81 bis etwa 0.83 steht. Von der Einschnürung 15 bis zum umlaufenden Ringbund 8 nimmt der Aussendurchmesser des konkaven Bereichs 61 wieder zu. Der Übergang des konkaven Bereichs 61 zum umlaufenden Ringbund 8 ist derart gestaltet, dass die Tangente an die Mantelfläche 62 mit der Achse A der Spreizhülse einen Winkel von etwa 90° einschliesst. Die Länge b des konkaven Bereichs 61 steht zum Aussendurchmesser e an der Einschnürung 15 zum Aussendurchmesser an der Einschnürung im Verhältnis von etwa 1.22 bis etwa 1.27, insbesondere etwa 1.24 bis etwa 1.25.

Die Spreizlappen 6 setzen sich über den umlaufenden Ringbund 8 hinaus fort und sind unter Bildung eines zweiten plastischen Gelenks 9 einstückig mit Distanzsegmenten 10 verbunden. Der Aussendurchmesser d der Spreizhülse im Bereich der Distanzsegmente 10 ist kleiner als der Aussendurchmesser r im Bereich des umlaufenden Ringbunds 8. Die Länge a der Distanzsegmente, welche vom zweiten plastischen Gelenk 9 bis zu ihrem Vorderende 12 gemessen wird, beträgt etwa das 0.19-fache bis etwa das 0.2-fache der Gesamtlänge 1 der Spreizlappen 6, die vom ersten plastischen Gelenk 5 bis zum Vorderende der Spreizhülse 2 gemessen wird, welches gleichzeitig das vorderste Ende 12 der Distanzsegmente 10 bildet. Die freie Stirnfläche 11 der Distanzsegmente 10 verläuft kalottenförmig gekrümmt. Der radiale Abstand f des vordersten Endes 12 der Distanzsegmente 10 von der Achse A der Spreizhülse ist kleiner als der radiale Abstand g des zweiten plastischen Gelenks 9 von der Achse A. Die axiale Länge der Distanzsegmente 10 nimmt also von dem der Durchgangsbohrung 3 zugewandten Bereich zum Umfang der Spreizhülse hin ab.

Die Durchgangsbohrung 3 der Spreizhülse verläuft im rückwärtigen Endbereich mit dem Innengewinde 4 zylindrisch. Zwischen dem ersten plastischen Gelenk 5 und dem umlaufenden Ringbund 8 verjüngt sie sich konisch bis zu einem kleinsten Innendurchmesser i, der im Bereich des umlaufenden Ringbundes 8 angeordnet ist. Im sich konisch verjüngenden Bereich schliesst die Wandung 31 der Durchgangsbohrung 3 mit der Achse A der Spreizhülse 2 einen Winkel β von etwa 8° bis etwa 13°, vorzugsweise etwa 10°, ein. Im Anschluss an den Bereich mit dem kleinsten Innendurchmesser i erweitert sich die Durchgangsbohrung 3 in Richtung des Vorderendes der Spreizhülse 2 wieder. Vom zweiten plastischen Gelenk 9 bis zum vordersten Ende 12 der Distanzsegmente 10 verläuft die Durchgangsbohrung 3 im wesenlichen zylindrisch. Der Innendurchmesser der Durchgangsbohrung 3 im Bereich der Distanzsegmente 10 beträgt das Doppelte des radialen Abstands f des vordersten Endes 12 der Distanzsegmente 10 von der Achse A der Spreizhülse 2 und steht zur Länge a der Distanzsegmente 10 im Verhältnis von etwa 1.7 bis etwa 1.85.

Der Spreizdübel 1 umfasst einen Spreizkörper 13, der in der Durchgangsbohrung 3 unter Aufweiten der Spreizlappen 6 von einer Ausgangslage in eine Endlage vortreibbar ist. Fig. 1 zeigt den Spreizkörper 13 in seiner Ausgangslage, in der sein vorderer Bereich 14 unverlierbar in der Durchgangsbohrung 3 gehalten ist. In Fig. 2 ist der Spreizkörper 13 in vorgetriebener Endlage dargestellt. Der in eine Aufnahmebohrung B in einem Mauerwerk M eingesetzte Spreizdübel 1 ist über die Mantelfläche 62 der Spreizlappen 6 kraftschlüssig mit der Bohrlochwandung verspreizt. Zusätzlich bildet der umlaufende Ringbund 8 mit der Wandung der Aufnahmebohrung B einen während des Aufspreizens erzeugten Formschluss. Die Distanzsegmente 10 sind über das zweite plastische Gelenk 9 nach innen zur Achse A geklappt, wobei die kalottenförmig ausbebildeten Stirnflächen 11 am Bohrlochgrund abgerollt sind. Der vordere Bereich 14 des Spreizkörpers 13 ist von dem zylindrisch ausgebildeten Abschnitt der Durchgangsbohrung 3 im Bereich der Distanzsegmente aufgenommen. Er kann, wie beispielsweise dargestellt, als konusförmige Verlängerung ausgebildet sein. Anstelle einer konischen Verlängerung kann der vordere Bereich 14 des Spreizkörpers auch eine kugelabschnittförmige Gestalt aufweisen. Der Spreizkörper 13 kann aber auch über seine gesamte Längserstreckung eine im wesentlichen zylindrische Gestalt besitzen oder über seine Längserstreckung eine im wesentlichen ballige Kontur aufweisen.

## Patentansprüche

1. Spreizdübel mit einer Spreizhülse (2), deren eine Endabschnitt Mittel zur Lastaufnahme (4) und deren gegenüberliegende Abschnitt einen Spreizbereich aufweist, der durch eine Anzahl von zum setzrichtungsseitigen Vorderende der Spreizhülse (2) offenen Längsschlitzen (7) in Spreizlappen (6) unterteilt ist, die unter Bildung eines plastischen Gelenks (5) mit der Spreizhülse (2) verbunden sind und einen durch die Längsschlitze (7) unterbrochenen, umlaufenden Ringbund (8) aufweisen, und mit einem Spreizkörper (13), der in einer axialen Durchgangsbohrung (3) der Spreizhülse (2) unter Aufweiten des Spreizbereiches von einer Ausgangslage in eine Endlage vortreibbar ist, **dadurch gekennzeichnet**, dass sich die Spreizlappen (6) über den umlaufenden Ringbund (8) hinaus erstrecken und unter Bildung eines zweiten plastischen Gelenks (9) einstückig mit Distanzsegmenten (10) verbunden sind, die entgegen der Aufweitbewegung der Spreizlappen (6) einknickbar sind.

2. Spreizdübel nach Anspruch 1, dadurch gekennzeichnet, dass sich die Durchgangsbohrung (3) vom ersten plastischen Gelenk (5) in Richtung des zweiten plastischen Gelenks (9) bis zu einem Bereich des kleinsten Bohrungsdurchmessers (i) verjüngt, der im Bereich des umlaufenden Ringbundes (8) angeordnet ist, wobei die Wandung (31) der Durchgangsbohrung (3) mit der Längsachse (A) der Spreizhülse (2) einen Winkel (β) von etwa 8° bis etwa 13°, vorzugsweise etwa 10°, einschliesst und sich danach zum Vorderende der Spreizhülse (2) wieder erweitert.

3. Spreizdübel nach Anspruch 1 oder 2, dadurch gekennzeichnet, dass die Spreizhülse (2) im Bereich der Distanzsegmente (10) einen Aussendurchmesser (d) aufweist, der kleiner ist als als der Aussendurchmesser (r) im Bereich des umlaufenden Ringbundes (8).

4. Spreizdübel nach einem der vorangehenden Ansprüche, dadurch gekennzeichnet, dass die freie Stimfläche (11) der Distanzsegmente (10) kalottenförmig gekrümmt ist, wobei das vorderste Ende der Distanzsegmente (12) in einem radialen Abstand (f) zur Achse (A) der Spreizhülse (2) angeordnet ist, der kleiner ist als der radiale Abstand (g) des zweiten plastischen Gelenks (9) zur Achse (A).

5. Spreizdübel nach einem der vorangehenden Ansprüche, dadurch gekennzeichnet, dass die Distanzsegmente (10) eine vom zweiten plastischen Gelenk (9) bis zum vordersten Ende (12) der Distanzsegmente (10) gemessene axiale Länge (a) aufweisen, die das etwa 0.19-fache bis etwa 0.2-fache der vom ersten plastischen Gelenk (5) zum Vorderende der Spreizhülse (12) gemessenen Gesamtlänge (l) der Spreizlappen (6) beträgt.

6. Spreizdübel nach Anspruch 5, dadurch gekennzeichnet, dass die Durchgangsbohrung (3) vom vordersten Ende (12) der Distanzsegmente (10) bis zum zweiten plastischen Gelenk (9) zylindrisch ausgebildet ist und einen Bohrungsdurchmesser (2f) aufweist, der zur Länge (a) der Distanzsegmente (10) im Verhältnis von etwa 1.7 bis etwa 1.85 steht.

7. Spreizdübel nach einem der vorangehenden Ansprüche, dadurch gekennzeichnet, dass die Spreizlappen (6) im Bereich (61) zwischen dem ersten plastischen Gelenk (5) und dem umlaufenden Ringbund (8) eine im wesentlichen konkav verlaufende Aussenkontur aufweisen, die derart in den Ringbund (8) einmündet, dass die Tangente an die Mantelfläche (62) mit der Achse (A) der Spreizhülse (2) einen Winkel von etwa 90° einschliesst, und dass im konkaven Bereich (62) eine Einschnürung (15) mit einem Aussendurchmesser (e) vorgesehen ist, der zum Aussendurchmesser (s) der Spreizhülse (2) im Bereich der Lastangriffsmittel (4) im Verhältnis von etwa 0.81 bis etwa 0.83 steht.

8. Spreizdübel nach Anspruch 7, dadurch gekennzeichnet, dass der konkave Bereich (61) der Spreizlappen (6) eine Länge (b) aufweist, die zum Aussendurchmesser (e) an der Einschnürung (15) im Verhältnis von etwa 1.22 bis etwa 1.27, insbesondere etwa 1.24 bis etwa 1.25, steht.

9. Spreizdübel nach Anspruch 7 oder 8, dadurch gekennzeichnet, dass die Einschnürung (15) etwa mittig der Längserstreckung (b) des konkaven Bereichs (62) angeordnet ist.

10. Spreizdübel nach einem der vorangehenden Ansprüche, dadurch gekennzeichnet, dass 4 bis 8, vorzugsweise 6 Spreizlappen (6) vorgesehen sind.

## Claims

1. Expansion dowel with an expansion sleeve (2) the one end section of which comprises means for receiving a load (4) and the opposite section of which comprises an expansion area which is divided by a number of longitudinal slots (7) which are open towards the front end of the expansion sleeve (2), as seen in the setting direction, into expansion tabs (6) which are joined to the expansion sleeve (2) whilst forming a ductile hinge (5), and comprise an annular collar (8) which is interrupted by the longitudinal slots (7), and with an expansion mandrel (13) which is in an axial throughbore (3) of the expansion sleeve (2) driveable forward from an initial position into an end position whilst expanding the expansion area, **characterised in that** the expansion tabs (6) extend beyond the annular collar (8) and are integrated with distance segments (10), which are collapsible against the expansion movement of the expansion tabs (6), whilst forming a second ductile hinge (9).

2. Expansion dowel according to Claim 1, **characterised in that** the throughbore (3) narrows from the first ductile hinge (5) in the direction of the second ductile hinge (9) up to the area of the smallest bore diameter (i) which is positioned in the area of the annular collar (8), and the wall (31) of the throughbore (3) includes with the longitudinal axis (A) of the expansion sleeve (2) an angle (β) of between approximately 8° and approximately 13°, preferably approximately 10°, and widens thereafter again towards the front end of the expansion sleeve (2).

3. Expansion dowel according to Claim 1 or 2, **characterised in that** the expansion sleeve (2) comprises in the area of the distance segments (10) an outside diameter (d) which is smaller than the outside diameter (r) in the area of the annular collar (8).

4. Expansion dowel according to one of the above claims, **characterised in that** the free end surface (11) of the distance segments (10) is spherically curved, and the forwardmost end of the distance segments (12) is arranged at a radial distance (f) to the axis (A) of the expansion sleeve (2) which is smaller than the radial distance (g) of the second ductile hinge (9) relative to the axis (A).

5. Expansion dowel according to one of the above claims, **characterised in that** the distance segments (10) have an axial length (a) as measured from the second ductile hinge (9) up to the forwardmost end (12) of the distance segments (10) which equals between approximately 0.19 times and approximately 0.2 times the total length (I) of the expansion tabs (6) as measured from the first ductile hinge (5) to the front end of the expansion sleeve (12).

6. Expansion dowel according to Claim 5, **characterised in that** the throughbore (3) is cylindrical from the forwardmost end (12) of the distance segments (10) to the second ductile hinge (9) and has a bore diameter (2f) at a ratio of approximately 1.7 to approximately 1.85 relative to the length (a) of the distance segments (10).

7. Expansion dowel according to one of the above claims, **characterised in that** the expansion tabs (6) have in the area (61) between the first ductile hinge (5) and the annular collar (8) an essentially concave outside contour which merges into the annular collar (8) in such a manner that the tangent on the casing surface (62) with the axis (A) of the expansion sleeve (2) includes an angle of approximately 90°, and in the concave area (62) is provided a constriction (15) with an outside diameter (e) which is at a ratio of between approximately 0.81 and approximately 0.83 relative to the outside diameter (s) of the expansion sleeve (2) in the area of the load engaging means (4).

8. Expansion dowel according to Claim 7, **characterised in that** the concave area (61) of the expansion tabs (6) has a length (b) at a ratio between approximately 1.22 and approximately 1,27, in particular between approximately 1.24 and approximately 1.25, relative to the outside diameter (e) at the constriction (15).

9. Expansion dowel according to Claim 7 or 8, **characterised in that** the constriction (15) is arranged approximately centrally of the longitudinal extent (b) of the concave area (62).

10. Expansion dowel according to one of the above claims, **characterised in that** between 4 and 8, preferably 6, expansion tabs (6) are provided.

## Revendications

1. Cheville à expansion comprenant un manchon expansible (2) dont l'une des portions extrêmes comporte des moyens de réception de charge (4) et dont la portion opposée comporte une zone d'expansion qui, par une pluralité de fentes longitudinales (7) ouvertes vers l'extrémité avant du manchon expansible (2) orientée dans le sens d'enfoncement, est divisée en pattes expansibles (6) qui sont reliées au manchon expansible (2) en formant une articulation plastique (5) et qui comportent un collet annulaire périphérique (8) interrompu par les fentes longitudinales (7), et comprenant un corps d'expansion (13) qui peut être enfoncé dans un trou axial débouchant (3) du manchon expansible (2) en faisant passer la zone d'expansion d'une position initiale à une position finale élargie, caractérisée en ce que les pattes expansibles (6) s'étendent au-delà du collet annulaire périphérique (8) et, en formant une seconde articulation plastique (9), sont reliées d'un seul tenant à des segments d'écartement (10), lesquels peuvent se replier à l'encontre du mouvement d'élargissement des pattes expansibles (6).

2. Cheville à expansion selon la revendication 1, caractérisée en ce que le trou débouchant (3) se rétrécit à partir de la première articulation plastique (5) en direction de la seconde articulation plastique (9) jusqu'à une zone de plus petit diamètre de trou (i) qui se trouve dans la zone du collet: annulaire périphérique (8), la paroi (31) du trou débouchant (3) formant avec l'axe longitudinal (A) du manchon expansible (2) un angle (β) d'environ 8° à environ 13°, de préférence d'environ 10°, et s'élargissant à nouveau ensuite vers l'extrémité avant: du manchon expansible (2).

3. Cheville à expansion selon la revendication 1 ou 2, caractérisée en ce que, dans la zone des segments d'écartement (10), le manchon expansible (2) possède un diamètre extérieur (d) qui est plus petit que son diamètre extérieur (r) dans la zone du collet. annulaire périphérique (8).

4. Cheville à expansion selon une des revendications précédentes, caractérisée en ce que la face frontale libre (11) des segments d'écartement (10) est arrondie en forme de calotte, l'extrémité la plus antérieure des segments d'écartement (12) se trouvant à une distance radiale (f) de l'axe (A) du manchon expansible (2) qui est plus petite que la distance radiale (g) entre la seconde articulation plastique (9) et l'axe (A).

5. Cheville à expansion selon une des revendications précédentes, caractérisée en ce que les segments d'écartement (10) possèdent une longueur axiale (a) qui est mesurée entre la seconde articulation plastique (9) et leur extrémité la plus antérieure (12) et qui correspond à environ 0,19 fois à environ 0,2 fois la longueur totale (1) des pattes expansibles (6) mesurée entre la première articulation plastique (5) et l'extrémité avant du manchon expansible (12).

6. Cheville à expansion selon la revendication 5, caractérisée en ce que, entre l'extrémité la plus antérieure (12) des segments d'écartement (10) et la seconde articulation plastique (9), le trou débouchant (3) est de forme cylindrique et possède un diamètre de trou (2f) qui correspond à environ 1,7 fois à environ 1,85 fois la longueur (a) des segments d'écartement (10) .

7. Cheville à expansion selon une des revendications précédentes, caractérisée en ce que, dans la zone (61) comprise entre la première articulation plastique (5) et le collet annulaire périphérique (8), les pattes expansibles (6) présentent un contour extérieur sensiblement concave qui aboutit au collet annulaire (8) de façon que la tangente à la surface périphérique (62) forme, avec l'axe (A) du manchon expansible (2), un angle d'environ 90°, et en ce que dans la zone (62) est prévu un rétrécissement (15) possédant un diamètre extérieur (e) qui correspond à environ 0,81 fois à environ 0,83 fois le diamètre extérieur (s) du manchon expansible (2) dans la zone du moyen d'application de charge (4).

8. Cheville à expansion selon la revendication 7, caractérisée en ce que la zone concave (61) des pattes expansibles (6) possède une longueur (b) qui correspond à environ 1,22 fois à environ 1,27 fois, en particulier à environ 1,24 fois à environ 1,25 fois, le diamètre extérieur (e) au niveau du rétrécissement: (15).

9. Cheville à expansion selon la revendication 7 ou 3, caractérisée en ce que le rétrécissement (15) se trouve sensiblement au milieu de l'extension longitudinale (b) de la zone concave (62).

10. Cheville à expansion selon une des revendications précédentes, caractérisée en ce qu'il est prévu 4 à 8, de préférence 6 pattes expansibles (6).
